Europäisches Patentamt

European Patent Office

Office européen des brevets

(19)

(11) Numéro de publication : **0 169 157 B1**

(12) **FASCICULE DE BREVET EUROPÉEN**

(45) Date de publication du fascicule du brevet :
09.11.88

(51) Int. Cl.⁴ : **A 01 D 78/10**

(21) Numéro de dépôt : **85440049.6**

(22) Date de dépôt : **15.07.85**

(54) Perfectionnement aux machines agricoles avec au moins un tambour à axe sensiblement vertical, pour déplacer des produits se trouvant sur le sol.

(30) Priorité : **19.07.84 FR 8411625**

(43) Date de publication de la demande :
**22.01.86 Bulletin 86/04**

(45) Mention de la délivrance du brevet :
**09.11.88 Bulletin 88/45**

(84) Etats contractants désignés :
**AT CH DE GB IT LI NL SE**

(56) Documents cités :
**EP-A- 0 128 864**
**FR-A- 2 405 007**
**FR-A- 2 465 403**
**FR-A- 2 468 293**
**GB-A- 5 693**
**US-A- 3 803 821**

(73) Titulaire : **KUHN S.A.**
**4, Impasse des Fabriques**
**F-67700 Saverne (FR)**

(72) Inventeur : **Reber, Walter**
**50, Avenue du Maréchal Foch**
**F-67700 Saverne (FR)**

(74) Mandataire : **Andres, Jean-Claude**
**KUHN S.A. 4, Impasse des Fabriques**
**F-67700 Saverne (FR)**

Jouve, 18, rue St-Denis, 75001 Paris, France

## Description

La présente invention se rapporte aux machines comportant notamment un châssis portant au moins un tambour à axe sensiblement vertical, lequel tambour est muni à sa partie inférieure d'une collerette de forme tronconique à laquelle sont reliés des segments flexibles destinés au déplacement de produits se trouvant sur le sol.

Les machines de ce genre peuvent être utilisées dans le secteur agricole pour le fanage, l'andainage ou le ramassage de fourrage coupé et couché sur le sol.

Dans la demande de brevet EP-A-0.128.864 (document appartenant à l'état de la technique défini selon l'article 54 (3) de la CBE) il est décrit une machine qui comporte notamment un châssis portant au moins un tambour à axe sensiblement vertical, muni à sa partie inférieure d'une collerette de forme tronconique à laquelle sont reliés des segments flexibles destinés au déplacement de produits se trouvant sur le sol, ces segments flexibles étant fixés sur la collerette par des moyens de retenue. Il est indiqué que les éléments flexibles peuvent être fixés sur la collerette de chaque tambour, soit par des vis ou des rivets, par collage ou par un anneau de serrage. Toutefois, aucun de ces moyens n'assure à lui seul une fixation sûre. De plus, ces moyens n'empêchent pas des retenues de fourrage au niveau de la fixation des segments flexibles sur la collerette. Or, de telles retenues altèrent la préhension et le déplacement du fourrage.

La présente invention a notamment pour but d'améliorer la tenue des segments flexibles sur leurs tambours respectifs et d'assurer un fonctionnement sans perturbations des machines équipées de tels segments.

L'invention concerne en conséquence une machine qui comporte notamment un châssis portant au moins un tambour à axe sensiblement vertical, muni à sa partie inférieure d'une collerette de forme tronconique à laquelle sont reliés des segments flexibles destinés au déplacement de produits se trouvant sur le sol, ces segments flexibles étant maintenus en appui entre la collerette et des panneaux fixés sur le tambour ou sur sa collerette et en outre retenus par des moyens de retenue, lesdits panneaux couvrant au moins en partie les extrémités de ces segments flexibles qui sont liées à la collerette.

L'utilisation à la fois de moyens de maintien et de moyens de retenue accroît considérablement la fiabilité de la fixation des segments flexibles. Le risque que des segments flexibles se détachent de leurs tambours respectifs durant le travail est ainsi pratiquement supprimé. De plus, grâce au recouvrement des extrémités des segments flexibles qui sont liées à une collerette, le risque de pénétration et de coincement de fourrage entre la collerette et lesdits segments est aussi pratiquement éliminé.

Selon une autre caractéristique de l'invention, les panneaux s'étendent jusqu'à ladite collerette ou la paroi du tambour correspondant. De plus, les différents panneaux se rapportant au même tambour se chevauchent au moins partiellement. Ces panneaux présentent ainsi un minimum d'arêtes auxquelles pourrait s'accrocher du fourrage.

Dans ce même but, les panneaux d'un même tambour peuvent être constitués par une couronne de forme tronconique.

Selon une autre caractéristique de l'invention les panneaux sont munis de nervures ou palettes d'entraînement. Ils participent ainsi efficacement au déplacement du fourrage. Ces nervures ou palettes s'étendent avantageusement dans le prolongement de nervures d'entraînement prévues sur les segments flexibles en vue d'obtenir une bonne coopération avec ces derniers.

Afin de favoriser le dégagement du fourrage des panneaux et des segments flexibles dans la zone de délivrance, les nervures ou palettes des panneaux et les nervures des segments se recouvrent légèrement, les nervures ou palettes des panneaux se situant — vu dans le sens de rotation du tambour correspondant — devant les nervures des segments. De plus, sur la partie où elles se recouvrent, les nervures ou palettes des panneaux ont sensiblement la même hauteur que les nervures des segments flexibles. Le fourrage passe ainsi des nervures ou palettes des panneaux de recouvrement aux nervures des segments flexibles sans rencontrer d'obstacles. Ce recouvrement partiel améliore aussi la liaison entre les segments flexibles et la collerette du tambour.

Pour ces mêmes raisons les nervures prévues sur les segments flexibles peuvent partiellement pénétrer dans les nervures d'entraînement des panneaux.

Selon une autre caractéristique de l'invention chaque segment flexible comporte au moins une nervure en forme d'arc de cercle concentrique au tambour et, les panneaux comportent au moins une gorge sensiblement de même forme, dans laquelle s'emboîte ladite nervure. On obtient ainsi une bonne tenue des segments flexibles sur toute la longueur de cette nervure. De ce fait, il est avantageux de prévoir une telle nervure sur toute la largeur des segments flexibles.

En vue d'améliorer la liaison des segments avec la collerette et les panneaux de chaque tambour, ces segments flexibles peuvent aussi être pourvus d'au moins une rainure dans laquelle s'engage une moulure prévue sur les panneaux.

Selon une autre caractéristique de l'invention chaque segment flexible est coudé vers le bas. La partie extérieure forme un angle $\alpha$ d'environ 160° avec sa partie servant à la fixation sur la collerette du tambour. Durant le travail les parties extérieures de ces segments se redressent sous l'effet de la force centrifuge. Elles s'étendent alors dans le prolongement de leurs parties intérieures et occupent une position idéale pour la préhension du fourrage au niveau du sol.

Selon une autre caractéristique de l'invention les parties extérieures des segments sont formées par des lamelles. Ces lamelles sont très souples, ce qui leur permet de bien suivre toutes les dénivellations du sol.

Une autre caractéristique de l'invention consiste à prévoir un renfort sous la collerette de chaque tambour. Ce renfort peut être constitué par un anneau dont le bord inférieur est plus près du sol que le bord extérieur de la collerette. Dans cette position l'anneau protège la collerette et les moyens de fixation des segments flexibles sur ladite collerette.

D'autres caractéristiques et avantages de l'invention ressortiront de la description ci-après, avec référence aux dessins annexés qui représentent, à titre d'exemples non limitatifs, quelques formes de réalisation.

Dans ces figures :

La figure 1 représente une vue d'ensemble d'une machine selon l'invention.

La figure 2 représente à plus grande échelle une vue de détail d'un tambour selon l'invention.

La figure 3 représente une vue analogue à celle de la figure 2, d'un autre exemple de réalisation.

La figure 4 représente en coupe un autre mode de réalisation.

La figure 5 représente une coupe analogue à celle de la figure 4, d'un autre mode de réalisation.

La figure 6 représente également une coupe analogue à celle de la figure 4, d'un autre mode de réalisation.

La figure 7 représente un autre exemple de réalisation d'un tambour selon l'invention.

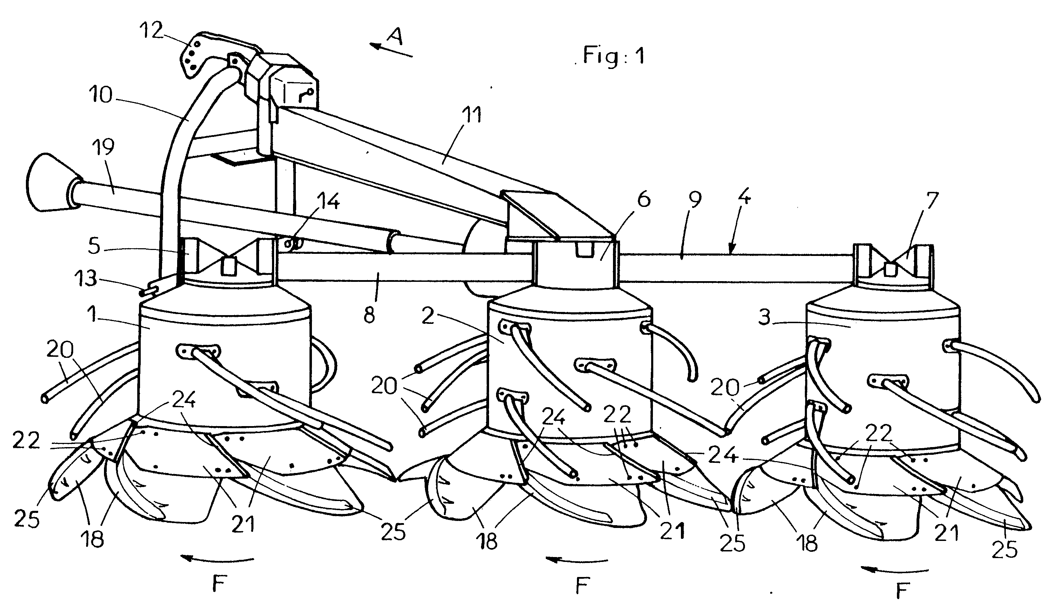

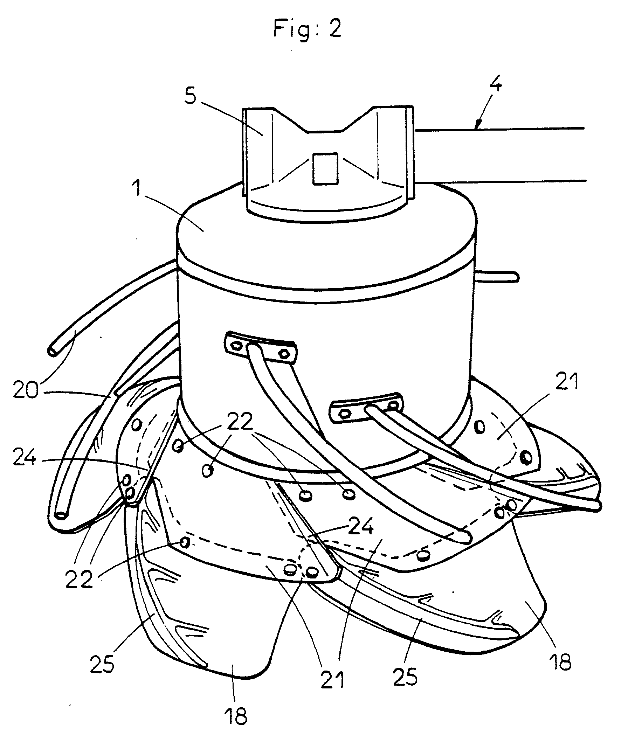

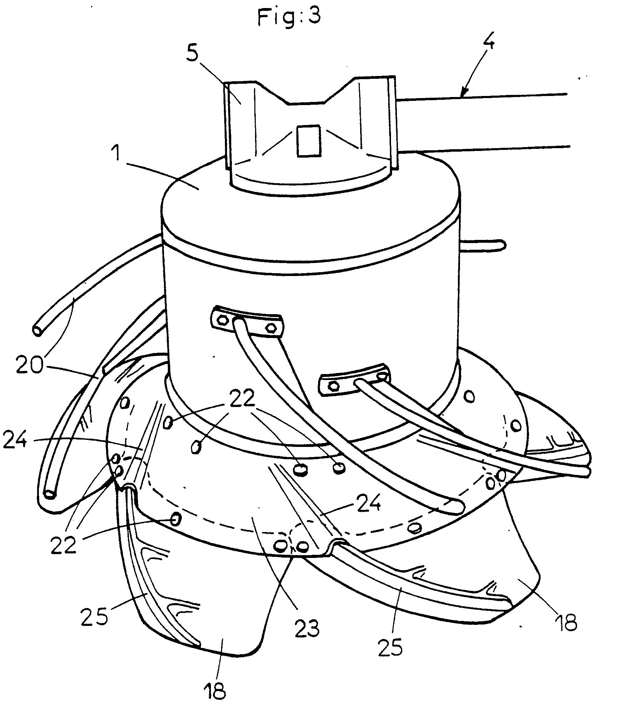

Telle qu'elle est représentée sur la figure 1, la machine selon l'invention comporte trois tambours (1, 2 et 3) sensiblement identiques. Ces tambours sont reliés entre eux par un châssis transversal (4) se composant de trois carters (5, 6 et 7) surmontant chacun un des tambours (1 à 3) et, de deux tubes (8 et 9). Ce châssis (4) est par ailleurs raccordé à un chevalet (10) au moyen d'une poutre de liaison (11). Ledit chevalet comporte trois points d'accouplement (12, 13 et 14) en vue de l'attelage de la machine à un tracteur d'entraînement non représenté.

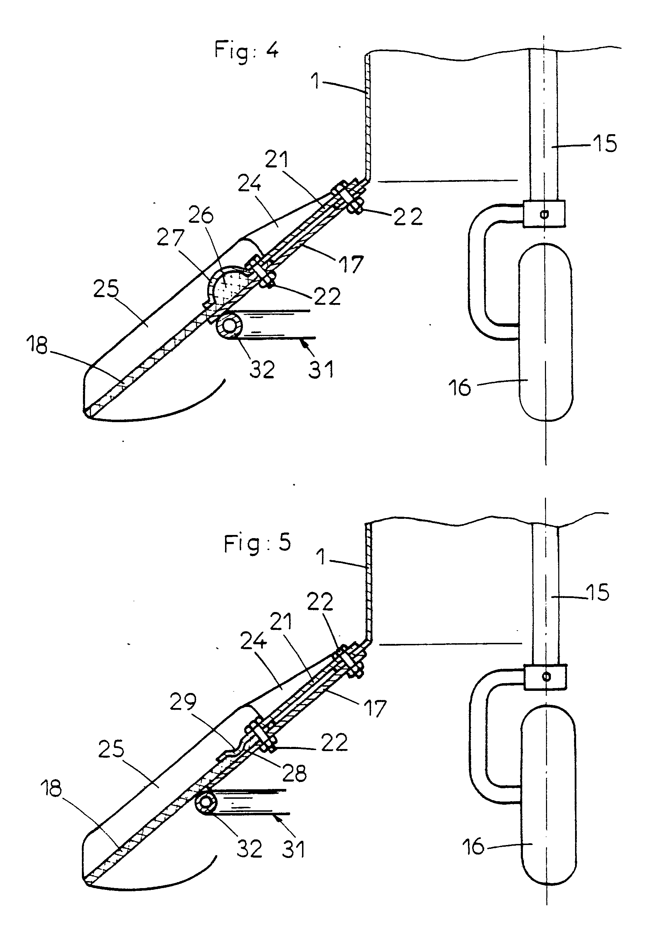

Les tambours (1, 2 et 3) ont des parois de préférence rigides, réalisées en tôle ou en matière plastique. Chacun de ces tambours (1 à 3) est guidé en rotation sur un axe support central (15) qui est représenté sur les figures 4 à 6. Les extrémités supérieures de ces axes (15) sont reliées aux carters (5 à 7) du châssis (4) tandis que leurs extrémités inférieures portent une roulette ou un galet (16) permettant à la machine de se déplacer sur le sol durant le travail. Chacun de ces tambours (1 à 3) porte à sa partie inférieure une collerette (17) de forme tronconique. Cette collerette (17) est rapportée au bord inférieur des tambours (1 à 3) qui est légèrement évasé à cet effet (voir figures 4 à 6). A ces collerettes (17) sont fixés des segments flexibles (18) destinés au ramassage de produits tels que du fourrage se trouvant sur le sol.

La machine représentée sur la figure 1 est destinée à l'andainage ou au déplacement de fourrage déjà andainé. Le châssis (4) est alors disposé obliquement par rapport au sens d'avancement indiqué par la flèche (A). Les tambours (1 à 3) sont entraînés en rotation dans le sens des flèches (F), autour de leurs axes supports (15) à partir de l'arbre de prise de force du tracteur. Pour cela, cet arbre de prise de force est relié au moyen d'un arbre à cardan (19) à un arbre intermédiaire non représenté et dont l'une des extrémités s'étend dans le carter (6) qui surmonte le tambour (2). Dans ce carter (6) ledit arbre intermédiaire est muni d'un pignon conique qui engrène avec une couronne dentée solidaire du tambour (2) et assure ainsi l'entraînement de ce dernier. L'entraînement des deux autres tambours (1 et 3) est également assuré à partir de cette couronne. Pour cela il est prévu un arbre longitudinal qui est logé dans les tubes (8 et 9) du châssis (4). Cet arbre porte sur sa partie médiane un pignon qui engrène avec ladite couronne et près de chacune de ses extrémités un pignon conique qui engrène avec une couronne dentée solidaire du tambour (1 ou 3) correspondant. Ces derniers pignons coniques et couronnes dentées sont logés dans les carters (5 et 7) du châssis (4). Durant le travail d'andainage ou de déplacement d'andains les segments flexibles (18) glissent sous le fourrage en suivant parfaitement les dénivellations du sol. Le fourrage est alors soulevé et déplacé latéralement d'un tambour à l'autre en vue de la formation d'un andain à côté du tambour (3) le plus en arrière. Le déplacement latéral du fourrage est favorisé au moyen d'entraîneurs (20) prévus sur les parois des tambours (1 à 3).

Les tambours (1, 2 et 3) peuvent aussi être utilisés pour le ramassage de fourrage. Ils sont alors associés à des appareils tels que des remorques, des presses ou des ensileuses et acheminent le fourrage vers ces appareils.

Pour le fanage il est préférable d'équiper les tambours (1, 2 et 3) d'entraîneurs plus agressifs qui entraînent le fourrage ramassé par les segments (18) vers le côté arrière de la machine et, le dispersent à nouveau sur toute la largeur de la bande de terrain travaillée.

Conformément à une importante caractéristique de l'invention les extrémités des segments flexibles (18) qui sont liées à la collerette (17) sont au moins en partie couvertes au moyen de panneaux (21). Dans l'exemple des figures 1 et 2 ces panneaux (21) sont constitués par des pièces ayant sensiblement la forme de parallélogrammes. Ils peuvent être réalisés en tôle d'acier ou en matière plastique.

Lesdits panneaux (21) s'étendent de préférence jusqu'à la collerette (17) ou la paroi du tambour (1, 2 ou 3) correspondant, de manière à assurer une parfaite protection des extrémités des segments (18). Leur fixation sur les collerettes (17) et éventuellement sur la base des tambours (1 à 3) est réalisée au moyen de boulons (22) disposés sur deux rangées. Les boulons (22) de la rangée extérieure traversent en sus les segments flexibles (18) et servent à leur fixation sur les collerettes (17). Ces segments (18) sont ainsi pincés entre les collerettes (17) et les panneaux (21). Les boulons (22) de la rangée intérieure assurent en plus la fixation des collerettes (17) sur les tambours (1 à 3).

Comme cela ressort clairement de la figure 2, sur chaque tambour (1, 2 ou 3) sont prévus plusieurs panneaux (21) qui se chevauchent. Dans cet exemple il y a autant de panneaux (21) que de segments flexibles (18). Cet agencement n'est toutefois par limitatif. On peut aussi prévoir un panneau (21) pour la fixation de plusieurs segments flexibles (18).

Dans l'exemple de la figure 3 les panneaux (21) sont constitués par une couronne (23) de forme tronconique. Comme dans les autres exemples cette couronne (23) est fixée sur la collerette (17) au moyen de boulons (22). On utilise ainsi une seule pièce pour améliorer la tenue de tous les segments flexibles (18) d'un même tambour.

Lesdits panneaux (21) ou la couronne (23) sont avantageusement munis de nervures ou palettes d'entraînement (24). Celles-ci accrochent le fourrage soulevé par les segments flexibles (18) et aident à le déplacer latéralement. Ces nervures ou palettes (24) s'étendent avantageusement dans le prolongement de nervures d'entraînement (25) prévues sur les segments flexibles (18). Cela favorise le passage d'une partie du fourrage des segments flexibles (18) sur les panneaux (21) durant le travail.

Dans l'exemple représenté sur la figure 2 les segments flexibles (18) comportent des nervures (25) qui sont prolongées en direction des parois des tambours (1 à 3). Les palettes d'entraînement (24) des panneaux (21) sont placées contre la face avant — vu dans le sens de rotation (F) de chaque tambour (1 à 3) — desdites nervures (25) des segments flexibles (18). De plus elles s'étendent sensiblement à la même hauteur que ces nervures (25), afin de faciliter le dégagement du fourrage dans la zone où il doit quitter les tambours (1 à 3). Ce relatif recouvrement des nervures (25) des segments flexibles (18) par les palettes (24) améliore la liaison entre lesdits segments et la collerette (17) de chaque tambour (1 à 3). Les mêmes avantages sont obtenus avec le mode de réalisation illustré sur la figure 3. Dans cet exemple les nervures (25) des segments flexibles (18) pénètrent dans les nervures d'entraînement (24) de la couronne (23). Bien que représenté en liaison avec la couronne (23), cet exemple peut aussi s'appliquer aux panneaux (21) de la figure 2. La hauteur de ces palettes ou nervures d'entraînement (24) diminue au fur et à mesure qu'elles se rapprochent de la paroi du tambour (1, 2 ou 3) correspondant. Cela ne nuit pas au déplacement du fourrage vu que la quantité qui arrive jusqu'à ladite paroi est relativement faible. Par contre on réduit avantageusement la ventilation qu'elles pourraient engendrer et qui aurait tendance à entraîner le fourrage entre les tambours (1 à 3).

Selon une autre caractéristique de l'invention, qui est illustrée sur la figure 4, chaque segment flexible (18) comporte au moins une nervure (26) en forme d'arc de cercle concentrique au tambour (1, 2 ou 3). Chaque panneau (21) comporte au moins une gorge (27) qui a sensiblement la même forme que la nervure (26). Au montage les nervures (26) s'emboîtent dans les gorges (27) en vue d'améliorer la liaison des segments flexibles (18) avec les panneaux (21).

Dans l'exemple représenté sur la figure 5 chaque segment flexible (18) présente au moins une rainure (28) en forme d'arc de cercle concentrique au tambour (1, 2 ou 3). Chaque panneau (21) comporte dans ce cas une moulure (29) sensiblement de même forme, qui s'engage dans ladite rainure. Cet agencement permet aussi d'améliorer la liaison entre les segments flexibles (18) et les panneaux (21).

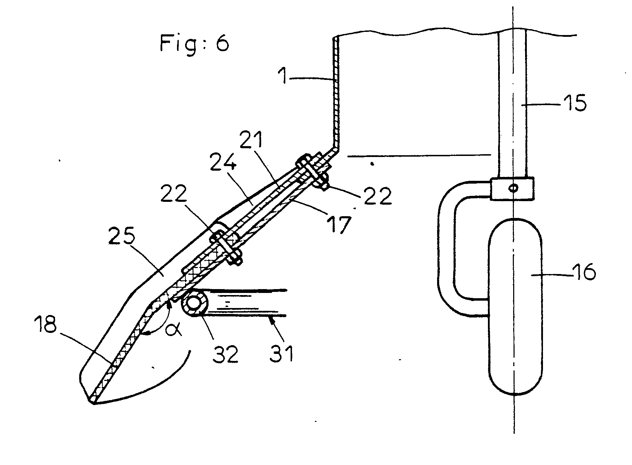

Selon une autre caractéristique de l'invention chaque segment flexible (18) est coudé vers le bas (voir figure 6). La partie extérieure de chaque segment (18) forme avec la partie servant à la fixation sur la collerette (17) un angle α d'environ 160°. Les segments (18) ainsi préformés adoptent au travail une position idéale pour la préhension du fourrage, sous l'effet de la force centrifuge.

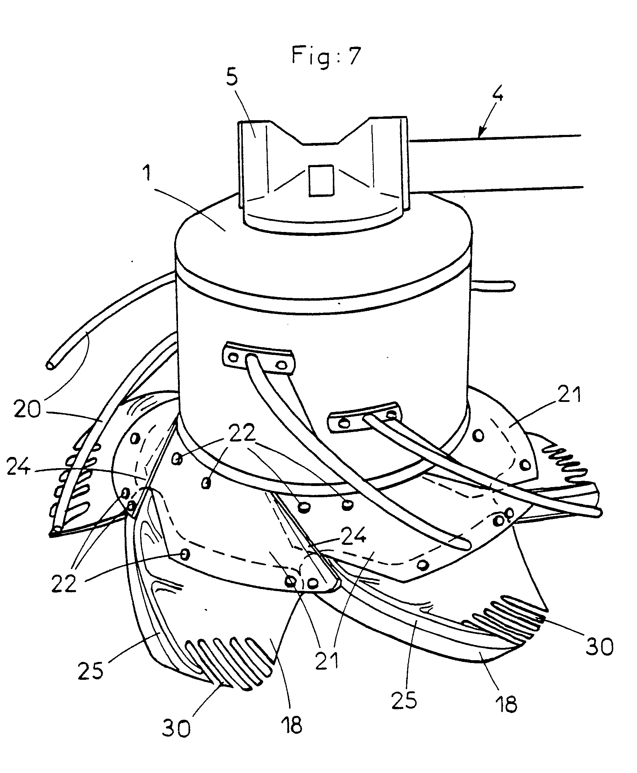

Dans l'exemple représenté sur la figure 7 la partie extérieure de chaque segment flexible (18) est formée par des lamelles (30). Celles-ci sont dirigées vers l'extérieur et vers le sens opposé au sens de rotation (F) des tambours (1 à 3). Les parties extérieures constituées par de telles lamelles (30) sont plus douces à l'égard du fourrage ramassé et de la végétation restante.

Il est avantageux de prévoir sous la collerette (17) de chaque tambour (1 à 3) un renfort (31). Comme cela ressort des figures 4, 5 et 6 ce renfort est constitué par un anneau (32) qui est soudé à la collerette (17). Il renforce ainsi cette collerette (17) et évite qu'elle ne se déforme en cas de rencontre avec un obstacle. De plus, il est avantageux de disposer ce renfort (31) de telle sorte que sa partie inférieure soit plus près du sol que le bord extérieur de la collerette (17). Cette dernière n'entre alors pratiquement pas en contact avec les éventuels obstacles.

Sur la figure 5 l'anneau (32) se situe au bord extérieur de la collerette (17). Ainsi, en cas de forte pression sur les segments flexibles (18) ils s'appuient sur une surface arrondie. Cette surface n'est pas agressive à l'égard de ces segments (18) et ne risque pas de les endommager.

Il est bien évident qu'on pourra apporter aux exemples de réalisation décrits ci-dessus divers perfectionnements, modifications ou additions ou remplacer certains éléments par des éléments équivalents sans pour autant sortir du cadre de la présente invention, telle que définie dans les revendications.

## Revendications

1. Machine qui comporte notamment un châssis (4) portant au moins un tambour (1, 2, 3) à axe sensiblement vertical, muni à sa partie inférieure d'une collerette (17) de forme tronconique à laquelle sont reliés des segments flexibles (18) destinés au déplacement de produits se trouvant sur le sol, ces segments flexibles (18) étant maintenus en appui entre la collerette (17) et les panneaux (21, 23) fixés sur le tambour (1, 2, 3) ou sur sa collerette (17) et sont en outre retenus par des moyens de retenue (22, 26, 27, 28, 29), lesdits panneaux (21) couvrant au moins en partie les extrémités de ces segments flexibles (18) qui sont liées à la collerette (17).

2. Machine selon la revendication 1, caractérisée par le fait que les panneaux (21) s'étendent jusqu'à ladite collerette (17) ou la paroi du tambour (1, 2 ou 3).

3. Machine selon la revendication 1, caractérisée par le fait que les segments flexibles (18) sont pincés entre la collerette (17) et les panneaux (21).

4. Machine selon la revendication 1 ou 2, caractérisée par le fait que les panneaux (21) sont boulonnés sur la collerette (17).

5. Machine selon l'une quelconque des revendications 1 à 4, caractérisée par le fait que sur le tambour (1, 2 ou 3) sont prévus plusieurs panneaux (21) qui se chevauchent.

6. Machine selon l'une quelconque des revendications 1 à 4, caractérisée par le fait que les panneaux (21) sont constitués par une couronne (23) de forme tronconique.

7. Machine selon l'une quelconque des revendications précédentes, caractérisée par le fait que les panneaux (21) ou la couronne (23) sont munis de nervures ou palettes d'entraînement (24).

8. Machine selon la revendication 7, caractérisée par le fait que les nervures ou palettes d'entraînement (24) s'étendent dans le prolongement de nervures d'entraînement (25) prévues sur les segments flexibles (18).

9. Machine selon l'une quelconque des revendications précédentes, caractérisée par le fait que les segments flexibles (18) comportent des nervures (25) qui sont prolongées en direction du tambour (1, 2 ou 3) et que les palettes d'entraînement (24) des panneaux (21) sont placées contre la face avant — vu dans le sens de rotation (F) — desdites nervures (25) et, ont sensiblement la même hauteur que ces dernières.

10. Machine selon l'une quelconque des revendications 7 à 9, caractérisée par le fait que la hauteur des palettes ou nervures d'entraînement (24) des panneaux (21) ou de la couronne (23) diminue au fur et à mesure qu'elles se rapprochent des tambours (1, 2 ou 3).

11. Machine selon la revendication 8, caractérisée par le fait que les nervures (25) des segments flexibles (18) sont prolongées vers le tambour (1, 2 ou 3) et pénètrent partiellement dans les nervures d'entraînement (24) des panneaux (21) ou de la couronne (23).

12. Machine selon l'une quelconque des revendications précédentes, caractérisée par le fait que chaque segment (18) comporte au moins une nervure (26) en forme d'arc de cercle concentrique au tambour (1, 2 ou 3) et que les panneaux (21) comportent au moins une gorge (27) sensiblement de même forme, ladite nervure (26) s'emboîtant dans cette gorge (27).

13. Machine selon l'une quelconque des revendications 1 à 11, caractérisée par le fait que chaque segment (18) présente au moins une rainure (28) en forme d'arc de cercle concentrique au tambour (1, 2 ou 3) et que les panneaux (21) comportent au moins une moulure (29) sensiblement de même forme et qui s'engage dans ladite rainure (28).

14. Machine selon l'une quelconque des revendications précédentes, caractérisée par le fait que chaque segment (18) est coudé.

15. Machine selon la revendication 14, caractérisée par le fait que la partie extérieure de chaque segment (18) forme avec la partie servant à la fixation sur la collerette (17) un angle $\alpha$ d'environ 160°.

16. Machine selon l'une quelconque des revendications précédentes, caractérisée par le fait que la partie extérieure de chaque segment flexible (18) est formée par des lamelles (30).

17. Machine selon la revendication 16, caractérisée par le fait que les lamelles (30) s'étendent vers l'extérieur et vers la direction opposée au sens de rotation (F).

18. Machine selon l'une quelconque des revendications précédentes, caractérisée par le fait que sous la collerette (17) est prévu un renfort (31).

19. Machine selon la revendication 18, caractérisée par le fait que la partie inférieure du renfort (31) est plus près du sol que le bord extérieur de la collerette (17).

20. Machine selon la revendication 18 ou 19, caractérisée par le fait que le renfort (31) est constitué par un anneau (32).

21. Machine selon la revendication 1, caractérisée par le fait que des boulons de fixation (22) traversent les segments flexibles (18).

22. Machine selon la revendication 21, caractérisée par le fait que des boulons de fixation (22) traversent à la fois les segments flexibles (18) et des panneaux (21).

**Claims**

1. A machine which includes in particular a frame (4) carrying at least one drum (1, 2, 3) with a substantially vertical axis and equipped in its lower portion with a collar (17) of frustoconical shape to which flexible segments (18) intended for moving produce lying on the ground are connected, the said flexible segments (18) being held between the collar (17) and panels (21, 23) fixed onto the drum (1, 2, 3) or onto its collar (17), and being in addition retained by retention means (22, 26, 27, 28, 29), the said panels (21) covering at least partially those ends of the said flexible segments (18) which are connected to the collar (17).

2. A machine as in Claim 1, characterized by the fact that the panels (21) extend as far as the said collar (17) or the wall of the drum (1, 2 or 3).

3. A machine as in Claim 1, characterized by the fact that the flexible segments (18) are pinched between the collar (17) and the panels (21).

4. A machine as in Claim 1 or 2, characterized by the fact that the panels (21) are bolted onto the collar (17).

5. A machine as in any one of the Claims 1 to 4, characterized by the fact that on the drum (1, 2, 3) a number of panels (21) are provided which overlap.

6. A machine as in any one of the Claims 1 to 4, characterized by the fact that the panels (21) consist of a crown (23) of frustoconical shape.

7. A machine as in any one of the preceding Claims, characterized by the fact that the panels (21) or the crown (23) are equipped with driving ribs of blades (24).

8. A machine as in Claim 7, characterized by the fact that the driving ribs or blades (24) extend in prolongation of driving ribs (25) provided on the flexible segments (18).

9. A machine as in any one of the preceding Claims, characterized by the fact that the flexible segments (18) include ribs (25) which are prolonged in the direction of the drum (1, 2 or 3) and that the driving blades (24) on the panels (21) are located against the front face — looking in the direction of rotation (F) — of the said ribs (25) and have substantially the same height as the latter.

10. A machine as in any one of the Claims 7 to 9, characterized by the fact that the height of the driving blades or ribs (24) on the panels (21) or on the crown (23) is reduced as they near the drums (1, 2 or 3).

11. A machine as in Claim 8, characterized by the fact that the ribs (25) on the flexible segments (18) are prolonged towards the drum (1, 2 or 3) and penetrate partially into the driving ribs (24) on the panels (21) or on the crown (23).

12. A machine as in any one of the preceding Claims, characterized by the fact that each segment (18) includes at least one rib (26) in the shape of an arc of a circle concentric with the drum (1, 2 or 3) and that the panels (21) include at least one groove (27) of substantially the same shape, the said rib (26) being embedded in the said groove (27).

13. A machine as in any one of the Claims 1 to 11, characterized by the fact that each segment (18) exhibits at least one groove (28) in the shape of an arc of a circle concentric with the drum (1, 2 or 3) and that the panels (21) include at least one moulding (29) of substantially the same shape, which engages in the said groove (28).

14. A machine as in any one of the preceding Claims, characterized by the fact that each segment (18) is cranked.

15. A machine as in Claim 14, characterized by the fact that the outer portion of each segment (18) makes with the portion which serves for attachment to the collar (17) an angle α of about 160°.

16. A machine as in any one of the preceding Claims, characterized by the fact that the outer portion of each flexible segment (18) is formed by tongues (30).

17. A machine as in Claim 16, characterized by the fact that the tongues (30) extend towards the outside and towards the direction opposite to the direction of rotation (F).

18. A machine as in any one of the proceding Claims, characterized by the fact that under the collar (17) a stiffener (31) is provided.

19. A machine as in Claim 18, characterized by the fact that the bottom portion of the stiffener (31) is nearer the ground than the outer edge of the collar (17).

20. A machine as in Claim 18 or 19, characterized by the fact that the stiffener (31) consists of a ring (32).

21. A machine as in Claim 1, characterized by the fact that fixing bolts (22) pass through the flexible segments (18).

22. A machine as in Claim 21, characterized by the fact that fixing bolts (22) pass through both the flexible segments (18) and panels (21).

**Patentansprüche**

1. Maschine mit einem zumindest eine Trommel (1, 2, 3) mit im wesentlichen vertikaler Achse tragenden Rahmen (4), welche Trommel an ihrem unteren Teil mit einem kegelstumpfförmigen Kragen (17) versehen ist, an welchem, zum Versetzen von auf dem Boden befindlichen Produkten bestimmte flexible Segmente (18) angebracht sind, welche flexiblen Segmente (18) zwischen dem Kragen (17) und an der Trommel (1, 2, 3) oder an dem Kragen (17) befestigten Abdeckungen (21, 23) gehalten sind und außerdem durch Befestigungsmittel (22, 26, 27, 28, 29) festgelegt sind, wobei die Abdeckungen (21) die Enden der flexiblen Segmente (18), die mit dem Kragen (17) verbunden sind, zumindest teilweise bedecken.

2. Maschine nach Anspruch 1, dadurch gekennzeichnet, daß sich die Abdeckungen (21) bis zum Kragen (17) oder zur Wand der Trommel (1, 2 oder 3) erstrecken.

3. Maschine nach Anspruch 1, dadurch gekennzeichnet, daß die flexiblen Elemente (18) zwischen dem Kragen (17) und den Abdeckungen (21) eingeklemmt sind.

4. Maschine nach Anspruch 1 oder 2, dadurch gekennzeichnet, daß die Abdeckungen (21) an dem Kragen (17) festgeschraubt sind.

5. Maschine nach einem der Ansprüche 1 bis 4, dadurch gekennzeichnet, daß auf der Trommel (1, 2 oder 3) mehrere einander überlappende Abdeckungen (21) vorgesehen sind.

6. Maschine nach einem der Ansprüche 1 bis 4, dadurch gekennzeichnet, daß die Abdeckungen (21) aus einem kegelstumpfförmigen Ring (23) bestehen.

7. Maschine nach einem der vorhergehenden Ansprüche, dadurch gekennzeichnet, daß die Abdeckungen (21) oder der Ring (23) mit Mitnehmerrippen oder -flügeln (24) versehen sind.

8. Maschine nach Anspruch 7, dadurch gekennzeichnet, daß die Mitnehmerrippen oder -flügel (24) in der Verlängerung von auf den flexiblen Segmenten (18) vorgesehenen Mitnehmerrippen (25) verlaufen.

9. Maschine nach einem der vorhergehenden Ansprüche, dadurch gekennzeichnet, daß die flexiblen Segmente (18) Rippen (25) aufweisen, die in Richtung zur Trommel (1, 2 oder 3) verlangert sind, und daß die Mitnehmerflügel (24) der Abdeckungen (21) an der Vorderseite — im Rotationssinn (F) gesehen — der Rippen (25) anliegen und im wesentlichen deren Höhe haben.

10. Maschine nach einem der Ansprüche 7 bis 9, dadurch gekennzeichnet, daß die Höhe der Mitnehrmerflügel oder -rippen (24) der Abdeckungen (21) oder des Ringes (23) zu den Trommeln (1, 2 oder 3) hin verlaufend abnimmt.

11. Maschine nach Anspruch 8, dadurch gekennzeichnet, daß die Rippen (25) der flexiblen Segmente (18) zur Trommel (1, 2 oder 3) hin verlängert sind und teilweise in die Mitnehmerrippen (24) der Abdeckungen (21) oder des Ringes (23) eingreifen.

12. Maschine nach einem der vorhergehenden Ansprüche, dadurch gekennzeichnet, daß jedes Segment (18) zumindest eine kreisbogenförmig konzentrisch zur Trommel (1, 2 oder 3) verlaufende Rippe (26) aufweist und daß die Abdeckungen (21) zumindest eine im wesentlichen gegengleich geformte Rille (27) aufweisen, wobei die Rippe (26) in die Rille (27) eingreift.

13. Maschine nach einem der Ansprüche 1 bis 11, dadurch gekennzeichnet, daß jedes Segment (18) zumindest eine kreisbogenförmig konzentrisch zur Trommel (1, 2 oder 3) verlaufende Rille (28) aufweist und daß die Abdeckungen (21) zumindest eine im wesentlichen gegengleich geformte Rippe (29) aufweisen, die in die Rille (28) eingreift.

14. Maschine nach einem der vorhergehenden Ansprüche, dadurch gekennzeichnet, daß jedes Segment (18) abgebogen ist.

15. Maschine nach Anspruche 14, dadurch gekennzeichnet, daß der äußere Teil jedes Segments (18) mit dem zur Befestigung am Kragen (17) dienenden Teil einen Winkel α von etwa 160° einschließt.

16. Maschine nach einem der vorhergehenden Ansprüche, dadurch gekennzeichnet, daß der äußere Teil jedes flexiblen Segments (18) von Lamellen (30) gebildet ist.

17. Maschine nach Anspruch 16, dadurch gekennzeichent, daß die Lamellen (30) nach außen in die dem Rotationssinn (F) entgegengesetzte Richtung verlaufen.

18. Maschine nach einem der vorhergehenden Ansprüche, dadurch gekennzeichnet, daß unter dem Kragen (17) eine Verstärkung (31) vorgesehen ist.

19. Maschine nach Anspruch 18, dadurch gekennzeichnet, daß der untere Teil der Verstärkung (31) dem Boden näher ist als der Außenrand des Kragens (17).

20. Maschine nach Anspruch 18 oder 19, dadurch gekennzeichnet, daß die Verstärkung (31) aus einem Ringrohr (32) besteht.

21. Maschine nach Anspruch 1, dadurch gekennzeichnet, daß die Befestigungsschrauben (22) die flexiblen Segmente (18) durchsetzen.

22. Maschine nach Anspruch 21, dadurch gekennzeichnet, daß die Befestigungsschrauben (22) sowohl die flexiblen Segmente (18) als auch die Abdeckungen (21) durchsetzen.

Fig: 1

0 169 157

Fig: 2

Fig:3

Fig: 4

1

15

21
24
26
27
25
18
22
17
22
32
31
16

Fig: 5

1

15

22
21
24
29
25
18
17
22
28
32
31
16

Fig: 6

Fig : 7